# EUROPEAN PATENT SPECIFICATION

(11) **EP 0 339 292 B1**
(45) Date of publication and mention of the grant of the patent: **27.01.1993**
(21) Application number: 89105736.6
(22) Date of filing: 31.03.1989
(51) Int. Cl.: A47J 31/46, A47J 31/54

(54) **Instantaneous generator of hot water particularly for espresso coffee machines and the like**
Heisswassererzeuger, insbesondere für Espressokaffeemaschinen und dgl.
Générateur instantané d'eau chaude, en particulier pour machines à café expresso et analogues

(30) Priority: 20.04.1988 IT 2110488 U
(43) Date of publication of application: 02.11.1989
(73) Proprietor: RANCILIO MACCHINE PER CAFFE' S.p.A., I-20010 Villastanza di Parabiago (Milano) (IT)
(72) Inventor: Ruggin, Remo, I-20023 Cerro Maggiore (Milano) (IT); Allieri, Mario, I-20015 Parabiago (Milano) (IT)
(74) Representative: Liesegang, Roland, Dr.-Ing.

(56) References cited:
- EP-A- 0 243 326
- DE-U- 6 907 125
- FR-A- 1 223 425
- Italian utility model N. 210 535 dated 23.06.1987

## Description

The present invention generally relates to an apparatus for the production of hot water in espresso coffee machines of the type intended to prepare tea, camomile, infusions, tisanes, brothes and other beverages obtained from liofilized and dehydrated substances and, more particularly, to an instantaneous generator of hot water to be applied to such machines.

At present, for preparing hot beverages of this kind the hot water coming from the boiler of the espresso coffee machine or from special hot water accumulators is used.

In the case of the coffee machines having a steam boiler there is the disadvantage that the boiling water to be delivered has a taste as well as a concentration of substances other than the usual drinking water, since the water is maintained within the boiler for a long time to a high temperature (over 120°C). Furthermore, there is the further disadvantage that on the boiler walls deposits of calcium and magnesium salts, as well as of metals of other substances usually present in the drinking water are formed, thereby requiring, in the long run, servicing interventions for cleaning and scaling the boiler.

Also the hot water accumulators are affected by calcium salt deposits and, in order to avoid them, it is necessary to resort to the use of magnetic water conditioning means or water softener, which results in high installation and operation costs.

As another disadvantage it can be said that, where the espresso coffee machine is used in locations in which considerable amounts of hot water are used for preparing beverages of this kind or the like, so that the hot water contained in the boiler of the espresso coffee machine generally under pressure is bled nearly continuously, a strong evaporation of water due to its pressure drop occurs and, since to the rapid pressure drop a remarkable instantaneous steam production corresponds, which is vented in the environment and therefore cannot be utilized, an energy waste occurs.

To obviate these disadvantages in the Italian Utility Model No. 210.535 was already proposed an instantaneous generator of hot water having condensation chamber provided with means adapted to cause the instantaneous heating of the water coming from a cold water source by means of saturated steam coming from a steam source. In this instantaneous generator the steam line terminates in an injector and the water line discharges in a mixing chamber in which the nozzle of the steam injector is arranged. The steam is injected through the steam injector in the mixing chamber and by ventury effect the cold water is drawn from the steam jet in the condensation chamber where the water is instantaneously heated under absortion of the steam condensation heat. This generator is very expensive to be manufactured because the steam injector components require very accurate machining operations and the control of the flow rate of the cold water is difficult. Furthermore, the condensation chamber is of considerable size, thus making the generator very cumbersome so that its mounting in the espresso coffee machine is very questionable.

FR-A-1.223.425 relates to a machine for preparing coffee and permitting the automatic feeding of the constant level boiler by taking the feeding water from reservoirs which are not under pressure. The cold water is admitted under pressure by a pump in the passage leading to a mixing chamber and hot water is admitted from a hot water reservoir through a passage also leading to the mixing chamber where the flows of cold water and hot water are mixed for delivering, through temperature automatic control devices and the outlet passage, hot water at the desired temperature for obtaining the infusion. In this patent no steam is used for heating the cold water, but hot water coming from the reservoir. By means of the temperature automatic control devices the hot water cannot be obtained instantaneously as in the device according to the present invention, because for heating the cold water hot water is used. There is not the condensation chamber, nut only a mixing chamber and there are not the check valves in the steam and cold water passage. Furthermore, the cold water is pressurized by a pump, whereas in the present invention the cold water is supplied by the conventional water network.

This invention aims at obviating also these disadvantages by providing a device to be applied to the espresso coffee machine and capable of instantaneously generating hot water by direct drawing from a cold water source, for example the water network and having the advantage to be comprised of inexpensive components and also capable of offering a continuous control of the flow rate of the incoming cold water from an easily accessible position.

According to the invention, the instantaneous generator of hot water for an espresso coffee machine comprises means for heating water coming from a cold water source by means of saturated steam coming from a steam source, a condensation chamber, a valve provided between the condensation chamber and the hot water outlet which can be actuated from the outside of the generator for controlling the hot water delivery is characterized in that said heating means comprise a tubular body having a steam inlet, a cold water inlet and a hot water outlet, said steam inlet and said cold water inlet discharging in the bore of said tubular body which acts as a condensation chamber in which the steam and cold water are caused to flow in order to generate the hot water, and both the steam inlet and the cold water inlet being provided with check valves for preventing the cold water from being returned in the steam source and the hot water and the steam under high pressure in the condensation chamber from entering the cold water source, respectively.

This invention will be now described in more detail in connection with the preferred embodiment thereof, given by way of example only and therefore not intended in a limitative sense, illustrated in the accompanying drawing, wherein:

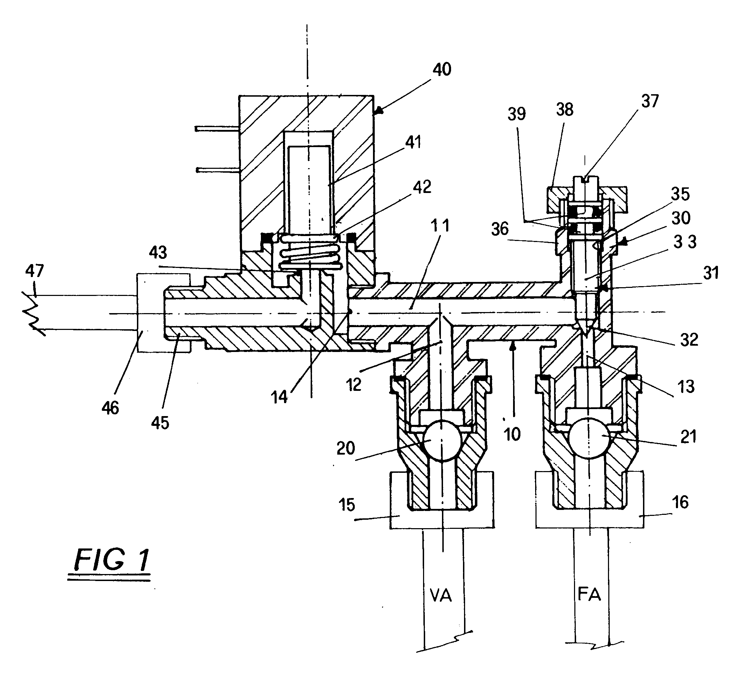

Fig. 1 shows the hot water generating device in a longitudinal section.

As can be seen from Fig. 1, the instantaneous generator of hot water in accordance with the present invention, comprises a tubular body, generally designated with 10, the bore of which forms a steam condensation chamber 11. In this chamber 11 a pair of inlets 12,13 open, the inlet 12 being provided for the passage of the steam and the inlet 13 being provided for the passage of the cold water. Inlet 12 is placed downstream from the inlet 13 and the condensation chamber 11 is provided with an outlet 14. Inlet 12 is provided with a fitting 15 for the connection to a steam source VA, for example the steam generator of the espresso coffee machine (not shown).

Between the steam fitting 15 and the steam inlet 12 opening in the condensation chamber 11, a check valve 20 is provided the purpose of which is to avoid the return of the cold water in the steam source VA during the rest periods.

The cold water inlet 13 is provided with a fitting 16 for the connection to a cold water source FA and between the cold water fitting 16 and the cold water inlet 13 opening in the condensation chamber 11 a check valve 21 is provided the purpose of which is to avoid a return of hot water and steam in the cold water source FA. This return of hot water and steam in the cold water source FA can occur because in the condensation chamber 11 the steam and the hot water can be at a higher pressure than that of the incoming cold water.

Opposite the cold water inlet 13 a control device of the cold water flow rate, generally designated by 30 is placed, which substantially includes a valve element 31 having a conical tip 32 and a threaded stem 33 screwed in a bore 35 of a fitting 36. This valve element 31 has at the outer end thereof a slit 37 intended to receive a screwdriver for the regulation of the flow rate of the cold water. This flow rate regulation is obtained by screwing the valve element when a decrease of the cold water flow rate is desired and by unscrewing the valve element when an increase of the cold water flow rate is desired. The valve element 31 is provided with a nut 38 acting as a stop element for controlling the degree of opening of the valve and the seal between the fitting 36 and the valve element 31 is obtained through a pair of O-rings 39.

At the outlet 14 of the condensation chamber 11 a normally closed electromagnetic valve 40 is arranged the function of which is to open and close the hot water passage. Of course, in place of the electromagnetic valve a conventional mechanical valve can be provided. This electromagnetic valve has a seat 43 which cooperates with armature 41 acting as a valve element and which, in the energized condition of the valve, is in a closed position under the force of a spring 42. When the electromagnetic valve 40 is energized, the armature 41 acting as a valve element is lifted from the seat 43 thereby bringing the electromagnetic valve in an open position.

Outlet 45 of the electromagnetic valve 40 is connected through a fitting 46 to a conventional jet-breaker for the delivery of the hot water (not shown).

The operation of the just described device is as follows.

When the electromagnetic valve 40 is opened its armature 41 is lifted thereby opening the valve seat 43 and communicating the condensation chamber 11 with hot water delivery conduit 47. In the chamber 11 the saturated steam coming from the inlet 12 and the cold water coming from the inlet 13 are automatically admitted under pressure. Of course, the flow rate of the incoming cold water is preset through the control device 30 as a function of the hot water temperature which is desired at the valve outlet 45.

In the chamber 11 the steam condenses into water and the steam condensation heat is simultaneously transmitted to the cold water coming from the upstream inlet 13, thereby heating the cold water to the temperature desired by the user and controlled by the control device 30. If hotter water is desired, the valve element 31 must be screwed so that its conical tip 32 closes the cold water inlet 13 to a greater degree, whereas if cooler water is desired, the valve element 31 must be unscrewed so that the conical tip 32 opens the cold water inlet 13 to a greater degree.

Once the delivery of the required water quantity has occured the electromagnetic valve 40 is deenergized, so that the armature 41 thereof acting as valve element closes again the valve seat 43 under the force of the spring 42 and the system returns in the rest position.

With the instantaneous generator of hot water according to the invention, the disadvantages of the above mentioned known instantaneous generator of hot water are obviated, which disadvantages are caused by the complexity and therefore the costs of the device components and furthermore the great advantage is obtained that the flow rate of the incoming cold water can be controlled by the outside of the device, so that more or less hot water can be obtained in a very easy manner as desired.

## Claims

1. Instantaneous generator of hot water for an espresso coffee machine, said generator comprising means for heating water coming from a cold water source by means of saturated steam coming from a steam source, a condensation chamber, a valve provided between the condensation chamber and the hot water outlet which can be actuated from the outside of the generator for controlling the hot water delivery, characterized in that said heating means comprise
- a tubular body (10) having a steam inlet (12), a cold water inlet (13) and a hot water outlet (14),
- said steam inlet (12) and said cold water inlet (13) discharge in the bore of said tubular body (10) which acts as a condensation chamber (11) in which the steam and cold water are caused to flow in order to generate the hot water, and
- both the steam inlet (12) and the cold water inlet (13) are provided with check valves (20,21) for preventing the cold water from being returned in the steam source (VA) and the hot water and the steam under high pressure in the condensation chamber (11) from being returned in the cold water source (FA), respectively.

2. Instantaneous generator of hot water according to claim 1, characterized in that a fitting (36) is integrally formed with the tubular body (10) in axial alignment with the cold water inlet (13), said fitting (36) being arranged to receive a valve element (31) for controlling the flow rate of the cold water from the outside.

3. Instantaneous generator of hot water according to claim 2, characterized in that said fitting (36) is provided with internal threads and said valve element (31) is provided with external threads to cooperate with the internal threads of said fitting (36) for adjusting the extent of inlet opening of the cold water inlet (13) or passage therethrough when said valve element (31) is rotated.

## Revendications

1. Générateur instantané d'eau chaude pour machines à café expresso comportant des moyens de chauffage pour chauffer l'eau qui arrive d'une source d'eau froide au moyen de vapeur saturée provenant d'une source de vapeur, une chambre de condensation, une soupape prévue entre ladite chambre de condensation et la sortie de l'eau chaude, qui peut être actionnée du dehors du générateur pour commander l'écoulement de l'eau chaude, caractérisé en ce que lesdits moyens de chauffage comportent
- un corps tubulaire (10) ayant une entrée (12) pour la vapeur, une entrée (13) pour l'eau froide et une sortie (14) pour l'eau chaude,
- ladite entrée de vapeur (12) et ladite entrée (13) de l'eau froide s'ouvrent dans l'alésage dudit corps tubulaire (10) qui agit comme une chambre de condensation (11) dans laquelle la vapeur et l'eau froide sont obligées à passer pour engendrer l'eau chaude, et
- soit l'entrée de la vapeur (12) soit l'entrée (13) de l'eau chaude sont pourvues des clapets de retenue (20,21) pour empêcher le retour de l'eau froide dans la source de vapeur (VA) et respectivement le retour de l'eau chaude et de la vapeur sous haute pression contenues dans la chambre de condensation (11) dans la source de l'eau froide (FA).

2. Générateur instantané d'eau chaude selon la revendication 1, caractérisé en ce qu'un raccord (36) est formé en une seule pièce avec le corps tubulaire (10) en alignement axial avec l'entrée (13) de l'eau froide, ledit raccord (36) étant arrangé de façon à recevoir une soupape (31) pour le réglage du debit de l'eau froide du dehors.

3. Générateur instantané d'eau chaude selon la revendication 2, caractérisé en ce que ledit raccord (36) est pourvu d'un filetage intérieur et ladite soupape (31) est pourvue d'un filetage extérieur destiné à coopérer avec le filetage intérieur dudit raccord (36) de façon à régler l'ouverture de l'entrée ou passage de l'eau froide (13) quand ladite soupape (31) est entraînée en rotation.

## Patentansprüche

1. Heißwassererzeuger für eine Espressokaffeemaschine, der Heizmittel zum Erwärmen von aus einer Kaltwasserquelle zuströmenden Wasser mittels aus einer Dampfquelle zuströmenden gesättigten Dampfes, eine Kondensierkammer, ein Ventil aufweist, das zwischen der Kondensierkammer und dem Heißwasserausfluß angeordnet ist und außen von dem Erzeuger betätigt werden kann, um die Heißwasserabgabe zu steuern, dadurch gekennzeichnet, daß die Heizmittel bestehen aus
- einem rohrförmigen Körper (10) mit einem Dampfeinlaß (12), einem Kaltwasserzulauf (13) und einen Heißwasserauslaß (14),
- der Dampfeinlaß (12) und der Kaltwasserzulauf (13) münden in eine Offnung in dem rohrförmigen Körper (10), der als Kondensierkammer (11) wirkt, in die der Dampf und das Kaltwasser eingeführt werden, um Heißwasser zu erzeugen, und
- sowohl der Dampfeinlaß (12) als auch der Kaltwasserzulauf (13) sind mit Rückschlagventile (20,21) versehen, um einen Rückfluß von Kaltwasser in die Dampfquelle (VA) bzw. eine Rückströmung von in der Kondensierkammer (11) liegendem Heißwasser und Hochdruckdampf in die Kaltwasserquelle (FA) zu vermeiden.

2. Heißwassererzeuger nach Anspruch 1, dadurch gekennzeichnet, daß an dem rohrförmigen Körper (10) ein Anschluß (36) in axialer Ausrichtung mit dem Kaltwasserzulauf (13) angeformt wobei dieser Anschluß (36) angeordnet ist, um ein Ventil (31) zum Steuern von außen der Kaltwasserleistung aufzunehmen.

3. Heißwassererzeuger nach Anspruch 2, dadurch gekennzeichnet, daß der Anschluß (36) mit einem Innengewinde versehen ist und das Ventil (31) mit einem Außengewinde versehen ist, um mit dem Innengewinde von Anschluß (36) zusammenzuarbeiten, um das Ausmaß der Offnung oder den Durchgang von dem Kaltwasserzulauf (13) zu regulieren, wenn das Ventil (31) gedreht wird.
